# FASCICULE DE BREVET EUROPEEN

(11) **EP 0 751 919 B1**
(45) Date de publication et mention de la délivrance du brevet: **17.06.1998**
(21) Numéro de dépôt: 95908837.8
(22) Date de dépôt: 10.02.1995
(51) Int. Cl.: C04B 35/65, C04B 35/66, F27D 1/16, B05D 1/02

(54) **MELANGE DE SUBSTANCES CHIMIQUES DESTINE A LA FORMATION D'UNE COMPOSITION REFRACTAIRE**
GEMISCH CHEMISCHER SUBSTANZEN ZUR HERSTELLUNG EINER FEUERFESTEN ZUSAMMENSETZUNG
MIXTURE OF CHEMICALS FOR FORMING A REFRACTORY COMPOSITION

(30) Priorité: 25.03.1994 BE 9400321
(43) Date de publication de la demande: 08.01.1997
(73) Titulaire: FIB-SERVICES, B-7300 Boussu (BE)
(72) Inventeur: DI LORETO, Oswaldo, B-7300 Boussu (BE)
(74) Mandataire: Callewaert, Jean
(86) Numéro de dépôt international: BE9500012
(87) Numéro de publication internationale: WO9526324

(56) Documents cités:
- EP-A- 0 426 848
- WO-A-92/19566
- BE-A- 871 496
- GB-A- 2 213 812

## Description

La présente invention est relative à un mélange de substances chimiques destiné à la formation d'une composition réfractaire se présentant soit sous forme de blocs ou pièces de forme soit sous forme de revêtements réfractaires, notamment mélange pulvérulent, comprenant une charge de particules réfractaires, des particules métalliques et des particules contenant du peroxyde métallique.

Il s'agit plus particulièrement d'un mélange comprenant des particules réfractaires inertes et des substances chimiques pouvant, par oxydation ou décomposition, former de manière exothermique un oxyde mixte constituant une phase liante pour la charge de particules réfractaires.

Dans le brevet belge 871.496, il est fait appel, pour fabriquer des matériaux réfractaires, à des oxydes, des éléments oxydables, tels que des métaux, et des composés oxydants, notamment des peroxydes métalliques de granulométrie choisie entre 50 et 300 microns.

De même, dans le brevet britannique 2.213.812, ayant le même objet, on utilise des agents oxydants de granulométrie moyenne inférieure à 200 microns et de grain maximum inférieur à 500 microns, tels que des oxydes supérieurs, des nitrates, des perhalogénates ou des peroxydes. De tels peroxydes sont également cités dans la demande de brevet allemand 4.221.480 en tant que substance pouvant se décomposer.

Par ailleurs, la demande de brevet internationale PCT/BE92/00012, du même titulaire que la présente demande de brevet, décrit des mélanges contenant des peroxydes qui permettent de former des oxydes mixtes réfractaires jouant le rôle de phase liante pour des particules réfractaires.

Un des buts essentiels de la présente invention est de proposer un mélange de substances chimiques du type précité offrant une sécurité d'utilisation nettement augmentée par rapport aux mélanges de substances chimiques connus.

En effet, la mise en présence d'agents réducteurs, par exemple des éléments métalliques, et d'agents oxydants, tels que des peroxydes, peut poser des problèmes de stabilité, voire de maîtrise des réactions à divers stades de l'élaboration de la composition réfractaire précitée.

Ainsi, déjà lors de la préparation du mélange des particules métalliques et des particules contenant du peroxyde métallique, formant donc des agents réducteurs et des agents oxydants, la présence de tout composé pouvant déclencher une réaction catalytique violente doit être évitée.

Ensuite, lors de la mise en suspension du mélange pulvérulent obtenu dans un gaz porteur de projection, des vitesses de transport trop élevées peuvent également donner lieu à une décomposition incontrôlable, voir explosive.

Enfin, lors de la projection, il existe un risque de propagation à contre-courant du front de combustion vers la source de combustible.

Le mélange de substances chimiques, suivant l'invention, est caractérisé par le fait que les particules contenant du peroxyde métallique ont une teneur en peroxyde de calcium de tout au plus 75 % en poids et de préférence de tout au plus 65 % en poids, en peroxyde de magnésium de tout au plus 30 % en poids.

L'invention concerne encore un procédé de préparation d'une composition réfractaire par la mise en oeuvre du mélange précité.

Suivant ce procédé, l'on forme, dans un premier temps, par des réactions d'oxydation et/ou de décomposition de substances chimiques de départ, des oxydes réfractaires de métaux différents et dans des rapports tels à former, dans un deuxième temps, par réaction entre au moins 50 % de ces oxydes réfractaires naissants, un oxyde réfractaire mixte thermodynamiquement stable dans les conditions de cette réaction, la nature et la quantité des composés chimiques réagissants étant choisies d'une manière telle que les réactions susdites soient exothermiques et conduisent à la formation de l'oxyde mixte à l'état fondu.

Enfin, l'invention concerne encore un procédé pour appliquer le mélange de substances chimiques précité sur une paroi de manière à former un revêtement réfractaire.

Ce procédé se caractérise par le fait que l'on projette un mélange de ces substances chimiques contre cette paroi en amenant ce mélange et la composition réfractaire qui en résulte à une température supérieure à celle de la température de fusion de l'oxyde mixte, mais inférieure à celle de la charge qu'elle contient.

D'autres détails et particularités de l'invention ressortiront de la description donnée ci-après, à titre d'exemple non limitatif, de quelques formes de réalisation particulières de l'invention, avec e.a. référence aux dessins annexés.

La figure 1 est une représentation schématique agrandie de la transformation de la structure du mélange pulvérulent, suivant l'invention, en la structure de la composition réfractaire suivant l'invention.

La figure 2 est une représentation schématique agrandie d'une particule contenant du peroxyde métallique.

Dans les deux figures les mêmes chiffres de référence se rapportent aux mêmes éléments.

L'invention est entr'autres basée sur la constatation que le rapport massique entre les agents réducteurs et oxydants, l'état de division de ces derniers, tel que granulométrie, surface spécifique, l'homogénéité de la répartition de ces agents dans le mélange, le mode de transport pneumatique ainsi que la concentration des particules dans un gaz porteur ne constituent pas un ensemble de paramètres suffisant pour assurer la maîtrise du procédé de projection appliqué et, en particulier, la sécurité des opérateurs lors de cette projection.

En effet, il est apparu, d'une manière tout à fait imprévisible, au cours d'essais de projection que l'activité de l'agent oxydant, dont aucune mention n'a été faite jusqu'à présent dans la littérature antérieure et notamment dans les publications précitées, joue un rôle capital dans la sécurité de manipulation du mélange pulvérulent utilisé pour la formation d'un revêtement par projection à chaud.

A cet égard, il a été constaté que pour une même granulométrie, l'activité d'un agent oxydant déterminé est fonction de sa teneur dans les particules dont il fait partie et que, de plus, la valeur maximale admissible de cette teneur est elle-même fonction de la nature de l'agent oxydant.

Suivant l'invention, il a pu être déterminé qu'un mélange de substances chimiques, destiné à la formation d'une composition réfractaire, comprenant une charge des particules réfractaires, des particules métalliques et des particules avec une teneur en peroxyde de calcium de tout au plus 75 % en poids, et de préférence de tout au plus 65 % en poids, en peroxyde de magnésium de tout au plus 30 % en poids, donne entière satisfaction du point de vue sécurité, tout en permettant un contrôle parfait du procédé pour la formation d'une composition réfractaire avec des propriétés désirées pour l'application envisagée.

Il a été constaté que cette composition présente d'excellentes propriétés aussi bien du point de vue réfractaire que du point de vue mécanique, telles que résistance à l'usure et adhérence aux surfaces à recouvrir lorsque la composition se présente sur la forme d'un revêtement.

Avantageusement, le mélange de substances chimiques, suivant l'invention, contient des particules d'au moins un des métaux suivants : Al, Si, Mg, Fe, Cr, Ca, Ba, Sr, Zr, Ti, Be, sous forme distincte ou sous forme d'alliages techniquement réalisables à partir de ces métaux, alors que la charge réfractaire dans ce mélange comprend au moins un des oxydes, carbures et/ou nitrures des métaux suivants : Si, Al, Zr, Ca, Mg, Ti, Cr, notamment sous l'une quelconque de leurs variétés minéralogiques et/ou sous des formes mixtes telles que oxy-nitrures, oxy-carbures, carbo-nitrures. Ce mélange contient également un ou des composés, tel que peroxydes, chlorure et/ou carbures, qui, par réaction exothermique d'oxydation et/ou de décomposition, forment des oxydes réfractaires. Les oxydes peuvent se combiner à partir de leur état fondu pour constituer un oxyde mixte, tel que défini dans la demande de brevet internationale PCT/BE92/00012, dont la cristallisation a lieu en fin de réaction de formation. Les chlorures et carbures précités peuvent être du chlorure d'aluminium, du chlorure de silicium, du carbure d'aluminium, du carbure de silicium. Par extension, il peut s'agir de tout autre sel des métaux précités qui sont instables à la température à laquelle le mélange de substances chimiques est porté pour former la composition réfractaire.

Dans la charge réfractaire, les oxydes, carbures et nitrures des métaux précités peuvent se présenter sous différentes variétés minéralogiques telles que, par exemple, tridymite, cristobalite et verre de silice pour l'oxyde de silicium, ou encore sous formes mixtes telles que des oxy-nitrures, oxy-carbures, carbo-nitrures,... desdits métaux, qui présentent des propriétés réfractaires intéressantes.

Généralement, la teneur de la charge réfractaire dans le mélange pulvérulent de l'invention est comprise entre 0 et 90 % en poids de ce mélange.

Suivant une forme de réalisation préférentielle de l'invention, la teneur de la charge réfractaire dans le mélange est de 20 à 85 % en poids et de préférence de 50 à 85 % en poids par rapport au poids total du mélange, tandis que les particules de celle-ci présentent un diamètre moyen compris entre 200 et 800 microns avec un diamètre maximum de 1 mm, la répartition granulométrique de la charge se rapprochant, de plus, sensiblement de celle prévue par la loi d'Andreasen.

Pour ce qui concerne les particules métalliques précitées, celles-ci présentent avantageusement une granulométrie comprise entre 10 et 30 microns, tandis que la granulométrie des particules contenant du peroxyde est avantageusement comprise entre 5 et 30 microns.

Par ailleurs, il a été constaté que de bons résultats sont obtenus lorsque, dans le mélange, le rapport des différents constituants est choisi de manière à permettre la formation d'une composition réfractaire comprenant une charge de particules réfractaires noyées dans une phase liante présentant un point de fusion inférieur à celui de cette charge et contenant au moins 20 % et de préférence plus de 50 % d'au moins un oxyde réfractaire mixte d'au moins deux métaux différents.

Par oxyde mixte, il faut comprendre, dans le cadre de la présente invention, un composé chimique cristallisé formé d'au moins deux oxydes de métaux différents.

Suivant l'invention, par un choix judicieux de la phase liante qui est généralement essentiellement constituée d'un ou de plusieurs oxydes mixtes bien déterminés, il est possible d'obtenir une variété très étendue de compositions réfractaires permettant ainsi une grande diversité d'applications.

En fait, à partir des nombreux diagrammes binaires, ternaires existants dans la littérature scientifique, il est possible d'inventorier de nombreux oxydes réfractaires mixtes, binaires, ternaires etc... thermodynamiquement stables à la température d'application souhaitée, résistant aux conditions thermiques, chimiques et mécaniques exigées pour l'application envisagée.

Ainsi, en sélectionnant la nature et le nombre d'oxydes réfractaires constituant la charge, une grande variété de nouvelles compositions réfractaires composites, suivant l'invention, peuvent être synthétisées.

La proportion et la granulométrie de la charge de même que sa nature conditionnent les propriétés des masses réfractaires obtenues, notamment en jouant le rôle d'absorbant calorifique, ce qui permet de réguler la cinétique des réactions chimiques.

Pour la préparation de la composition réfractaire suivant l'invention, on forme, dans un premier temps, in situ, des oxydes réfractaires par oxydation et/ou décomposition d'au moins deux substances chimiques de départ différentes, choisies d'une manière telle et dans des rapports tels à pouvoir former, dans un deuxième temps, par réaction entre les oxydes réfractaires naissants très actifs, un oxyde réfractaire mixte thermodynamiquement stable dans les conditions de cette réaction.

La nature et la quantité des substances chimiques réagissantes sont telles que leur réaction d'oxydation et de synthèse soient exothermiques et conduisent à la fusion de l'oxyde mixte formé, constituant ainsi, après refroidissement et cristallisation, la phase liante de la composition réfractaire obtenue.

Ainsi, toute substance chimique conduisant après oxydation et/ou décomposition à la formation d'un oxyde réfractaire peut être utilisée pour la synthèse de l'oxyde mixte réfractaire.

Dans certains cas particuliers, les substances pour former dans un premier temps les oxydes réfractaires peuvent être constituées par un ou plusieurs composés métalliques à l'état liquide ou gazeux.

Par ailleurs, la répartition massique des poudres utilisées pour la formation de la composition réfractaire suivant l'invention doit être telle qu'elle favorise la formation de l'oxyde mixte souhaité. L'expérience a montré que le rapport massique des oxydes naissants dès les premières réactions de décomposition et/ou d'oxydation doit de préférence être compris entre 0,5 et 2 fois le rapport stoechiométrique de l'oxyde mixte à synthétiser. La température de réaction est avantageusement maintenue, au cours de la formation des oxydes réfractaires, de 50 à 200°C supérieure à la température de fusion de l'oxyde mixte à synthétiser.

La maîtrise de la température de réaction dépendant du bilan énergétique global des réactions successives pourra être obtenue par le choix d'un rapport judicieux entre les substances réagissantes et la charge. Ce rapport peut varier énormément en fonction de la nature, de la répartition granulométrique de la charge et des conditions thermiques environnantes en fonction de l'application et des conditions de mise en oeuvre du procédé ; un même composé peut ainsi être synthétisé dans des conditions particulières ou à température élevée respectivement pour la fabrication de pièces de forme ou pour la réparation de structures en fonctionnement, et donc de parois de fours à température relativement élevée.

Par le fait que la teneur maximale en peroxyde dans les particules correspondantes du mélange selon l'invention est limitée, pour la fiabilité de projection de ce mélange et afin de garantir la stoechiométrie de l'oxyde mixte, la teneur en oxygène du gaz porteur utilisé est adaptée en fonction de la quantité d'oxygène naissant pouvant être fournie par la décomposition du peroxyde de l'élément métallique M selon : MO₂ → MO + O.

Suivant l'invention, les particules contenant du peroxyde, utilisées dans le mélange suivant l'invention contiennent en plus du peroxyde généralement l'oxyde de base utilisé pour la formation du peroxyde en question ainsi que des composés de dégradation, tels que de l'hydroxyde et du carbonate du métal du peroxyde.

Suivant le choix des constituants du mélange et du rapport relatif de ces derniers la composition réfractaire obtenue à partir de ce mélange comprend un oxyde mixte constitué de pseudowollastonite, de 12CaO.7Al₂O₃, de CaO.Al₂O₃, de CaO.2Al₂O₃, de diopside, d'ackermanite, de monticellite et/ou de merwinite.

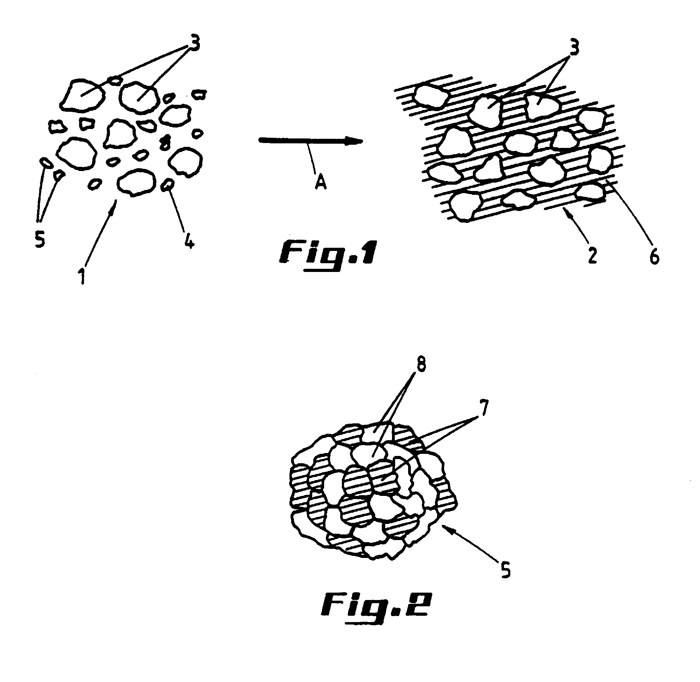

La figure 1 montre, d'une manière entièrement schématique et à une échelle très agrandie, la transformation de la structure du mélange réfractaire 1 suivant l'invention en une structure compacte d'une composition réfractaire cohérente 2. La flèche A indique le passage du mélange pulvérulent 1 en la composition cohérente 2.

Le mélange est constitué de particules 3 d'une charge réfractaire inerte présentant un diamètre moyen variant de 200 à 800 microns, avec un diamètre maximum de 1 mm, de particules métalliques 4 d'un diamètre moyen variant de 10 à 30 microns et de particules 5 contenant du peroxyde d'un diamètre moyen variant de 5 à 30 microns. Ce mélange pulvérulent 1 est transformé en une composition réfractaire 2 par des réactions d'oxydation des éléments métalliques des particules 4 et de décomposition des peroxydes contenus dans les particules 5 de manière à former, dans une étape intermédiaire, des oxydes réfractaires de métaux différents qui réagissent ensuite pour former des oxydes mixtes formant une phase liante 6 pour les particules 3 de la charge réfractaire inerte, comme illustré par la partie droite de la figure 1.

La figure 2 montre, également très schématiquement et à une échelle encore plus grande, une particule 5 contenant du peroxyde métallique.

Ce peroxyde est généralement obtenu, en voie industrielle, par réaction en solution de l'oxyde d'un métal avec du peroxyde d'hydrogène, avec formation secondaire de carbonate et d'hydroxyde de ce métal, comme produits de dégradation.

Une telle particule contenant du peroxyde est formée par coprécipitation et co-cristallisation de peroxyde métallique, avec de l'oxyde de base non réagi, du carbonate et de l'hydroxyde.

Ceci permet d'obtenir, par conséquent, des particules comprenant des cristaux de peroxyde 7 agglomérés avec des cristaux 8 de l'oxyde de base, de carbonate et d'hydroxyde.

Il est supposé que la sécurité et la stabilité des réactions pour la formation de la composition réfractaire 2 résultent du fait que les cristaux 7 de peroxyde se décomposent graduellement en libérant de l'oxygène naissant et réagissent au fur et à mesure pour former les oxydes mixtes, de sorte que la concentration en peroxyde réactif reste toujours très réduite aussi bien dans le mélange que dans la composition réfractaire en formation.

Ci-après, sont donnés quelques exemples concrets de réalisation de l'invention qui permettront de faire apparaître plus clairement le principe de l'invention en même temps que d'autres particularités et caractéristiques supplémentaires de celle-ci.

### Exemple 1

Cet exemple concerne la fabrication ou la réparation de produits réfractaires siliceux, tels que ceux rencontrés en four à coke.

La composition réfractaire, selon l'invention, est constituée de particules d'une charge réfractaire en silice d'un diamètre moyen de 300 microns transformée en cristobalite + tridymite. Ces particules sont enveloppées par une phase liante essentiellement constituée de pseudo-wollastonite CaSiO₃. Les matières premières utilisées pour la synthèse de cette phase liante sont : des particules de silicium métallique d'un diamètre moyen de 20 microns et des particules contenant du peroxyde de calcium d'un diamètre moyen de 10 microns. Pour les raisons de stabilité évoquée plus haut, les particules utilisées contenant ce peroxyde ont une teneur maximale en peroxyde inférieure à 75 % en poids et de préférence inférieure à 65 % en poids.

Pour former cette composition réfractaire le mélange utilisé contenait : 75 % en poids de particules de silice, 13 % en poids de particules de silicium et 12 % en poids de particules contenant 62 % de peroxyde de calcium.

### Exemple 2

Cet exemple est relatif aux produits réfractaires basiques magnésiens, tels que ceux utilisés en convertisseur d'aciérie.

Dans la composition réfractaire de ces produits, la phase liante est de type spinelle MgO.Al₂O₃ qui est synthétisée à partir de poudre d'aluminium d'un diamètre moyen de 20 microns et de particules à base de peroxyde de magnésium d'un diamètre moyen de 18 microns dans lesquelles la teneur maximale en peroxyde est limitée à 30 % en poids.

La charge contenue dans cette composition est formée de granulats de magnésie de type fritté ou électrofondu d'un diamètre moyen de 400 microns.

Le mélange utilisé pour former cette composition réfractaire contenait 76,4 % en poids de MgO, 12,2 % en poids de particules contenant 26 % de MgO₂ et 11,4 % en poids de particules d'aluminium.

Etant donné la quantité moindre d'oxygène naissant apportée par le peroxyde, le gaz porteur utilisé pour la projection du mélange est enrichie à 80 % d'oxygène.

### Exemple 3

Dans cet exemple, la phase liante est constituée de l'oxyde mixte MgO-SrO qui présente une haute réfractarité, la température de l'eutectique de cet oxyde étant voisine de 2000°C. Dans cette composition la charge réfractaire est formée de magnésie et/ou de dolomie.

Le mélange pour former cette composition réfractaire contient 68,5 % en poids de particules de MgO d'un diamètre inférieur à 1 mm, 7,5 % en poids de particules de Mg d'un diamètre moyen de 15 microns et 24 % en poids de particules contenant 86 % de SrO₂ d'un diamètre moyen de 18 microns.

Il est bien entendu que l'invention n'est pas limitée aux différentes formes de réalisation décrites ci-dessus, mais que bien des variantes peuvent être envisagées sans sortir du cadre de la présente invention. C'est ainsi que, dans certains cas, la teneur en peroxyde dans les particules correspondantes du mélange peut être extrêmement réduite.

## Revendications

1. Mélange pulvérulent de substances chimiques, destiné à la formation d'une composition réfractaire, comprenant une charge de particules réfractaires, des particules métalliques et des particules contenant du peroxyde métallique, caractérisé en ce que les particules contenant du peroxyde métallique ont une teneur en peroxyde de calcium de tout au plus 75 % en poids et de préférence de tout au plus 65 % en poids, en peroxyde de magnésium de tout au plus 30 % en poids.

2. Mélange suivant la revendication 1, caractérisé en ce qu'il comprend des particules métalliques essentiellement formées de silicium et des particules contenant du peroxyde de calcium.

3. Mélange suivant la revendication 1, caractérisé en ce qu'il comprend des particules métalliques essentiellement formées d'aluminium et des particules contenant du peroxyde de magnésium.

4. Mélange suivant l'une quelconque des revendications 1 à 3, caractérisé en ce qu'il contient des particules d'au moins un des métaux suivants : Al, Si, Mg, Fe, Cr, Ca, Ba, Sr, Zr, Ti, Be, sous forme distincte ou sous forme d'alliages techniquement réalisables à partir de ces métaux.

5. Mélange suivant l'une quelconque des revendications 1 à 4, caractérisé en ce que la charge précitée comprend au moins un des oxydes, carbures et/ou nitrures des métaux suivants : Si, Al, Zr, Ca, Mg, Ti, Cr, notamment sous l'une quelconque de leurs variétés minéralogiques et/ou sous des formes mixtes telles que oxy-nitrures, oxy-carbures, carbo-nitrures.

6. Mélange suivant l'une quelconque des revendications 1 à 5, caractérisé en ce qu'il contient au moins un composé métallique pouvant, par décomposition et/ou oxydation, former un oxyde réfractaire.

7. Mélange suivant l'une quelconque des revendications 1 à 6, caractérisé en ce que la teneur de la charge réfractaire est de 0 à. 90 % en poids, et de préférence 50 à 85 % en poids, par rapport au poids total du mélange.

8. Mélange suivant l'une quelconque des revendications 1 à 7, caractérisé en ce que les particules de la charge présentent un diamètre moyen compris entre 200 et 800 microns, le diamètre maximum étant de 1 mm.

9. Mélange suivant l'une quelconque des revendications 1 à 8, caractérisé en ce que la répartition granulométrique de la charge se rapproche sensiblement de celle prévue par la loi d'Andreasen.

10. Mélange suivant l'une quelconque des revendications 1 à 9, caractérisé en ce que les particules métalliques précitées présentent une granulométrie comprise entre 10 et 30 µm, tandis que la granulométrie des particules contenant du peroxyde est comprise entre 5 et 30 µm.

11. Mélange suivant l'une quelconque des revendications 1 à 10, caractérisé en ce que le rapport des différents constituants est choisi de manière à permettre la formation d'une composition réfractaire comprenant une charge de particules réfractaires noyées dans une phase liante présentant un point de fusion inférieur à celui de cette charge et contenant au moins 20 % et de préférence plus de 50 % d'au moins un oxyde réfractaire mixte d'au moins deux métaux différents.

12. Procédé de préparation d'une composition réfractaire par la mise en oeuvre du mélange suivant l'une quelconque des revendications 1 à 11, dans lequel il se forme, dans un premier temps, par des réactions d'oxydation et/ou de décomposition de substances chimiques de départ, des oxydes réfractaires de métaux différents et dans des rapports tels à former, dans un deuxième temps, par réaction entre au moins 50 % de ces oxydes réfractaires naissants, un oxyde réfractaire mixte thermodynamiquement stable dans les conditions de cette réaction, la nature et la quantité des composés chimiques réagissants étant choisies d'une manière telle que les réactions susdites soient exothermiques et conduisent à la formation de l'oxyde mixte à l'état fondu.

13. Procédé suivant la revendication 12, caractérisé en ce que l'on utilise, pour former les oxydes réfractaires dans le premier temps, un ou plusieurs composés métalliques à l'état liquide et/ou gazeux.

14. Procédé suivant l'une ou l'autre des revendications 12 et 13, caractérisé en ce que l'on règle les quantités et la nature des métaux, peroxydes et/ou composés métalliques mis en réaction pour la formation des oxydes réfractaires dans le premier temps d'une manière telle que le rapport massique des oxydes naissants soit compris entre 0,5 et 2 fois le rapport stoechiométrique des oxydes constituant l'oxyde mixte à former dans le deuxième temps.

15. Procédé suivant l'une quelconque des revendications 12 à 14, caractérisé en ce que l'on maintient la température, au cours de la formation des oxydes réfractaires précités, de 50 à 200°C supérieure à la température de fusion de l'oxyde mixte à former.

16. Procédé suivant l'une quelconque des revendications 12 à 15 caractérisé en ce que l'on règle la température au cours de la formation des oxydes réfractaires en ajustant la quantité et la granulométrie du ou des oxydes réfractaires introduits comme charge.

17. Procédé suivant l'une quelconque des revendications 12 à 16, caractérisé en ce que l'on amorce les réactions pour la formation des oxydes réfractaires au moyen d'une source de chaleur extérieure et en ce que l'on règle la température de ces réactions en tenant compte de la température initiale du système.

18. Procédé suivant l'une quelconque des revendications 12 à 17, caractérisé en ce que l'on règle les quantités et la nature des métaux, peroxydes et/ou composés métalliques mis en réaction de manière à former une composition contenant un oxyde mixte constitué de diopside, de monticellite et/ou de merwinite.

19. Procédé suivant la revendication 18, caractérisé en ce que l'on règle les quantités et la nature des métaux, peroxydes et/ou composés métalliques mis en réaction de manière à former une composition contenant un oxyde mixte constitué de 12CaO.7Al₂O₃, CaO.Al₂O₃ et/ou CaO.2Al₂O₃.

20. Procédé suivant la revendication 19, caractérisé en ce que l'on règle les quantités et la nature des métaux, peroxydes et/ou composés métalliques mis en réaction de manière à former une composition contenant un oxyde mixte constitué de BaO.SiO₂ et/ou BaO.Al₂O₃.

21. Procédé pour appliquer le mélange de substances chimiques suivant l'une quelconque des revendications 1 à 11 sur une paroi de manière à former un revêtement réfractaire, caractérisé en ce que l'on projette un mélange de ces substances chimiques contre cette paroi en amenant ce mélange et la composition réfractaire qui en résulte à une température supérieure à celle de la température de fusion de l'oxyde mixte, mais inférieure à celle de la charge qu'elle contient.

22. Procédé suivant la revendication 21, caractérisé en ce que l'on utilise un gaz porteur pour la projection du mélange précité contenant au moins 21 % d'oxygène et de préférence au moins 50 % d'oxygène.

23. Procédé suivant la revendication 21 ou 22, caractérisé en ce que l'on apporte au moins une partie des calories nécessaires pour amener ce mélange à la température précitée avant qu'il atteigne la paroi en formant in situ les oxydes réfractaires devant constituer l'oxyde mixte précité dans ladite composition.

24. Procédé suivant l'une quelconque des revendications 21 à 23, caractérisé en ce que l'on forme l'oxyde mixte in situ lors de la projection sur la paroi précitée.

## Patentansprüche

1. Pulverförmige Mischung chemischer Substanzen zur Herstellung einer feuerfesten Zusammensetzung, die eine Charge feuerfester Teilchen, metallischer Teilchen und Metallperoxid enthaltender Teilchen umfaßt, dadurch gekennzeichnet, daß die Metallperoxid enthaltenden Teilchen einen Gehalt an Calciumperoxid von höchstens 75 Gew.-%, vorzugsweise von höchstens 65 Gew.-%, und an Magnesiumperoxid von höchstens 30 Gew.-% aufweisen.

2. Mischung nach Anspruch 1, dadurch gekennzeichnet, daß sie metallische Teilchen, die im wesentlichen aus Silizium bestehen, und Teilchen, die Calciumperoxid enthalten, umfaßt.

3. Mischung nach Anspruch 1, dadurch gekennzeichnet, daß sie metallische Teilchen, die im wesentlichen aus Aluminium bestehen, und Teilchen, die Magnesiumperoxid enthalten, umfaßt.

4. Mischung nach einem der Ansprüche 1 bis 3, dadurch gekennzeichnet, daß sie Teilchen mindestens eines der folgenden Metalle: Al, Si, Mg, Fe, Cr, Ca, Ba, Sr, Zr, Ti, Be in getrennter Form oder in Form von technisch aus diesen Metallen herstellbaren Legierungen enthält.

5. Mischung nach einem der Ansprüche 1 bis 4, dadurch gekennzeichnet, daß die genannte Charge mindestens eines der Oxide, Carbide und/oder Nitride der folgenden Metalle: Si, Al, Zr, Ca, Mg, Ti, Cr, insbesondere in irgendeiner ihrer mineralogischen Varianten und/oder in gemischter Form, wie als Oxynitride, Oxycarbide, Carbonitride, umfaßt.

6. Mischung nach einem der Ansprüche 1 bis 5, dadurch gekennzeichnet, daß sie mindestens eine metallische Verbindung enthält, die durch Zersetzung und/oder Oxidation ein feuerfestes Oxid bilden kann.

7. Mischung nach einem der Ansprüche 1 bis 6, dadurch gekennzeichnet, daß der Gehalt an feuerfester Charge 0 bis 90 Gew.-% und vorzugsweise 50 bis 85 Gew.-%, bezogen auf das Gesamtgewicht der Mischung, beträgt.

8. Mischung nach einem der Ansprüche 1 bis 7, dadurch gekennzeichnet, däß die Teilchen der Charge einen mittleren Durchmesser von 200 bis 800 Mikron und einen maximalen Durchmesser von 1 mm aufweisen.

9. Mischung nach einem der Ansprüche 1 bis 8, dadurch gekennzeichnet, daß sich die Korngrößenverteilung der Charge deutlich an jene annähert, die durch das Gesetz von Andreasen vorgegeben ist.

10. Mischung nach einem der Ansprüche 1 bis 9, dadurch gekennzeichnet, daß die genannten metallischen Teilchen eine Kornverteilung zwischen 10 und 30 µm aufweisen, während die Kornverteilung der peroxidhaltigen Teilchen zwischen 5 und 30 µm liegt.

11. Mischung nach einem der Ansprüche 1 bis 10, dadurch gekennzeichnet, daß das Verhältnis der verschiedenen Bestandteile so ausgewählt ist, daß die Bildung einer feuerfesten Zusammensetzung ermöglicht wird, die eine Charge feuerfester Teilchen umfaßt, die in einer Bindephase, die einen Schmelzpunkt unterhalb von dem dieser Charge und einen Gehalt von mindestens 20 % und vorzugsweise mehr als 50 % mindestens eines feuerfesten gemischten Oxids mindestens zweier unterschiedlicher Metalle aufweist, eingebettet sind.

12. Verfahren zur Herstellung einer feuerfesten Zusammensetzung durch Einsatz der Mischung nach einem der Ansprüche 1 bis 11, bei welchem sich in einem ersten Zeitraum durch Oxidations- und/oder Zersetzungsreaktionen chemischer Ausgangssubstanzen feuerfeste Oxide verschiedener Metalle und in solchen Verhältnissen bilden, daß sich in einem zweiten Zeitraum durch Reaktion zwischen mindestens 50 % dieser entstehenden feuerfesten Oxide ein gemischtes feuerfestes Oxid bildet, das unter den Bedingungen dieser Reaktion thermodynamisch stabil ist, wobei die Natur und Menge der reagierenden chemischen Verbindungen in einer Weise ausgewählt sind, daß die oben genannten Reaktionen exotherm sind und zur Bildung des gemischten Oxids in geschmolzenem Zustand führen.

13. Verfahren nach Anspruch 12, dadurch gekennzeichnet, daß man zur Bildung der feuerfesten Oxide in dem ersten Zeitraum eine oder mehrere metallische Verbindungen in flüssigem und/oder gasförmigem Zustand verwendet.

14. Verfahren nach Anspruch 12 oder Anspruch 13, dadurch gekennzeichnet, daß man die Mengen und die Natur der Metalle, Peroxide und/oder metallischen Verbindungen, die zur Bildung der feuerfesten Oxide in dem ersten Zeitraum eingesetzt werden, so auswählt, daß das Massenverhältnis der sich bildenden Oxide zwischen 0,5 und 2 mal das stöchiometrische Verhältnis der Oxide beträgt, die das in dem zweiten Zeitraum zu bildende gemischte Oxid darstellen.

15. Verfahren nach einem der Ansprüche 12 bis 14, dadurch gekennzeichnet, daß man die Temperatur während der Bildung der genannten feuerfesten Oxide auf 50 bis 200°C oberhalb der Schmelztemperatur des zu bildenden gemischten Oxids hält.

16. Verfahren nach einem der Ansprüche 12 bis 15, dadurch gekennzeichnet, daß man die Temperatur während der Bildung der feuerfesten Oxide regelt, indem man die Menge und die Korngrößenverteilung des oder der als Charge eingeführten feuerfesten Oxids (Oxide) regelt.

17. Verfahren nach einem der Ansprüche 12 bis 16, dadurch gekennzeichnet, daß man die Reaktionen zur Bildung der feuerfesten Oxide mit Hilfe einer äußeren Wärmequelle startet und daß man die Temperatur dieser Reaktionen unter Berücksichtigung der Anfangstemperatur des Systems regelt.

18. Verfahren nach einem der Ansprüche 12 bis 17, dadurch gekennzeichnet, daß man die Mengen und die Natur der zur Reaktion gebrachten Metalle, Peroxide und/oder metallischen Verbindungen derart regelt, daß eine Zusammensetzung gebildet wird, die ein gemischtes Oxid enthält, welches aus Diopsid, Monticellit und/oder Merwinit besteht.

19. Verfahren nach Anspruch 18, dadurch gekennzeichnet, daß man die Mengen und die Natur der zur Reaktion gebrachten Metalle, Peroxide und/oder metallischen Verbindungen derart regelt, daß eine Verbindung gebildet wird, die ein gemischtes Oxid enthält, das aus 12CaO.7Al₂O_{3,} CaO.Al₂O₃ und/oder CaO.2Al₂O₃ besteht.

20. Verfahren nach Anspruch 19, dadurch gekennzeichnet, daß man die Mengen und die Natur der zur Reaktion gebrachten Metalle, Peroxide und/oder metallischen Verbindungen derart regelt, daß eine Zusammensetzung gebildet wird, die ein gemischtes Oxid enthält, das aus BaO.SiO₂ und/oder BaO.Al₂O₃ besteht.

21. Verfahren zur Aufbringung der Mischung chemischer Substanzen nach einem der Ansprüche 1 bis 11 auf einer Wand, um einen feuerfesten Überzug zu bilden, dadurch gekennzeichnet, daß man eine Mischung dieser chemischen Substanzen auf diese Wand sprüht, wobei man diese Mischung und die feuerfeste Zusammensetzung, die daraus resultiert, auf eine Temperatur bringt, die über der Schmelztemperatur des gemischten Oxids, jedoch unter der der Charge, die sie enthält, liegt.

22. Verfahren nach Anspruch 21, dadurch gekennzeichnet, daß man ein Trägergas für das Aufsprühen der genannten Mischung verwendet, das mindestens 21 % Sauerstoff und vorzugsweise mindestens 50 % Sauerstoff enthält.

23. Verfahren nach Anspruch 21 oder 22, dadurch gekennzeichnet, daß man mindestens einen Teil der Kalorien, die notwendig sind, um diese Mischung, bevor sie die zu bildende Wand erreicht, auf die genannte Temperatur zu bringen, dadurch zuführt, daß die feuerfesten Oxide in situ gebildet werden, bevor das genannte gemischte Oxid in der genannten Zusammensetzung dargestellt wird.

24. Verfahren nach einem der Ansprüche 21 bis 23, dadurch gekennzeichnet, daß man das gemischte Oxid in situ beim Aufsprühen auf die genannte Wand bildet.

## Claims

1. Pulverulent mixture of chemical substances, destined for forming a refractory composition, comprising a charge of refractory particles, metallic particles and particles containing metal peroxide, characterized in that the particles containing metal peroxide have a calcium peroxide content of 75% at most by weight and preferably 65% at most by weight, a magnesium peroxide content of 30% at most by weight.

2. Mixture according to claim 1, characterized in that it comprises metallic particles essentially formed of silicon and particles containing calcium peroxide.

3. Mixture according to claim 1, characterized in that it comprises metallic particles essentially formed of aluminium and particles containing magnesium peroxide.

4. Mixture according to any of claims 1 to 3, characterized in that it comprises particles of at least one of the following metals: Al, Si, Mg, Fe, Cr, Ca, Ba, Sr, Zr, Ti, Be, either in distinct form or in the form of technically feasible alloys of these metals.

5. Mixture according to any of claims 1 to 4, characterised in that the above-mentioned charge comprises at least one of the oxides, carbides and/or nitrides of the following metals: Si, Al, Zr, Ca, Mg, Ti, Cr, in particular in any of their mineralogical varieties and/or in mixed forms such as oxy-nitrides, oxy-carbides or carbo-nitrides.

6. Mixture according to any of claims 1 to 5, characterized in that it comprises at least one metal compound that can form a refractory oxide by decomposition and/or oxidation.

7. Mixture according to any of claims 1 to 6, characterized in that the content of the refractory charge is from 0 to 90% by weight, and preferably from 50 to 85% by weight, with respect to the total weight of the mixture.

8. Mixture according to any of claims 1 to 7, characterized in that the charge particles have an average diameter between 200 and 800 microns, the maximum diameter being 1 mm.

9. Mixture according to any of claims 1 to 8, characterized in that the particle size distribution of the charge closely approaches that laid down by Andreasen's principle.

10. Mixture according to any of claims 1 to 9, characterized in that the above-mentioned metallic particles have a particle size between 10 and 30 µm, while the size of the peroxide-containing particles is between 5 and 30 µm.

11. Mixture according to any of claims 1 to 10, characterized in that the ratio of the different constituents is chosen so as to permit formation of a refractory composition comprising a charge of refractory particles immersed in a binding phase having a melting point lower than that of said charge and containing at least 20% and preferably more than 50% of at least one refractory oxide mixed with at least two different metals.

12. Process for preparing a refractory composition, employing the mixture according to any of claims 1 to 11, in which, initially, refractory oxides of different metals are formed by oxidation and/or decomposition reactions of the initial chemical substances, in ratios such as to, subsequently, form a mixed refractory oxide by reaction between at least 50% of said nascent refractory oxides, said mixed refractory oxide being thermodynamically stable under the conditions of said reaction, the nature and quantity of the reacting chemical compounds being chosen such that said reactions are exothermic and lead to formation of the mixed oxide in the molten state.

13. Process according to claim 12, characterized in that in order to initially form the refractory mixed oxides, one or more metallic compounds in the liquid and/or gaseous state are used.

14. Process according to either claim 12 or 13, characterized in that the quantities and nature of the metals, peroxides and/or metallic compounds reacted to initially form the refractory oxides are regulated such that the mass ratio of the nascent mixed oxides is between 0.5 and 2 times the stoichiometric ratio of the oxides constituting the mixed oxide to be subsequently formed.

15. Process according to any of claims 12 to 14, characterized in that the temperature during formation of said refractory oxides is kept 50° to 200°C higher than the melting temperature of the mixed oxide to be formed.

16. Process according to any of claims 12 to 15, characterized in that the temperature during formation of the refractory oxides is regulated by adjusting the quantity and particle size distribution of the refractory oxide or oxides introduced as the charge.

17. Process according to any of claims 12 to 16, characterized in that the reactions for formation of the refractory oxides are primed by means of an external heat source, and in that the temperature of said reactions is regulated taking into account the initial temperature of the system.

18. Process according to any of claims 12 to 17, characterized in that the quantities and nature of the metals, peroxides and/or metallic compounds which are reacted are regulated in such a way as to form a composition containing a mixed oxide made up of diopside, monticellite and/or merwinite.

19. Process according to claim 18, characterized in that the quantities and nature of the metals, peroxides and/or metallic compounds which are reacted are regulated to form a composition containing a mixed oxide made up of 12CaO.7Al₂O₃, CaO.Al₂O₃ and/or CaO.2Al₂O₃.

20. Process according to claim 19, characterized in that the quantities and nature of the metals, peroxides and/or metallic compounds which are reacted are regulated to form a composition containing a mixed oxide made up of BaO.SiO₂ and/or BaO.Al₂O₃.

21. Process for applying to a wall the mixture of chemical substances according to any of claims 1 to 11, so as to form a refractory coating, characterized in that a mixture of said chemical substances is sprayed against the wall while bringing said mixture, and the refractory composition resulting from it, to a temperature higher than the melting temperature of the mixed oxide but lower than that of the charge which it contains.

22. Process according to claim 21, characterized in that a carrier gas is used to spray said mixture, containing at least 21% and preferably at least 50% oxygen.

23. Process according to claim 21 or 22, characterized in that at least part of the heat, necessary for bringing said mixture to said temperature before it reaches the wall and forms in situ the refractory oxides destined to make up said mixed oxide in said composition, is contributed from outside.

24. Process according to any of claims 21 to 23, characterized in that the mixed oxide is formed in situ during spraying onto said wall.
